# EUROPEAN PATENT APPLICATION

(11) **EP 4 465 709 A1**
(43) Date of publication of application: **20.11.2024**
(21) Application number: 24173776.6
(22) Date of filing: 02.05.2024
(51) Int. Cl.: H04W 56/00

(54) **EVALUATION PERIOD, DETECTION PERIOD WITH ALLOWED DROPPING RATE AND MEASUREMENT PERIOD DETERMINATION**

(30) Priority: 15.05.2023 IN 202341034079
(71) Applicant: Nokia Technologies Oy, 02610 Espoo (FI)
(72) Inventor: ABREU, Renato Barbosa, 9000 Aalborg (DK); LINDHOLM, Jari Olavi, 01940 Palojoki (FI); JAISWAL, Akshay, 231001 Mirzapur (IN); SAHOO, Biswapratapsingh, 560045 Bangalore (IN); BANDA, Rajesh, 560045 Bangalore (IN)
(74) Representative: Bryers Intellectual Property Ltd

(57) **Abstract**

Embodiments of the present disclosure relate to at least one evaluation period, a detection period with allowed dropping rate or a measurement period determination. A terminal device measures a reference signal receives power (RSRP) associated with a physical sidelink broadcast channel (PSBCH) of a synchronization reference device, determines a number of consecutive periods associated with a listen before talk (LBT) failure in which a sidelink synchronization signal (SLSS) is unavailable from the synchronization reference device, and determines, based on the number of consecutive periods, at least one of an evaluation period, a detection period with allowed dropping rate or a measurement period for evaluating the RSRP, wherein the consecutive periods correspond to a plurality of consecutive sidelink synchronization signal block (S-SSB) periods or a plurality of consecutive discontinuous reception (DRX) cycles. Thus, wrong initiation of SLSS transmission event and wrong reselection of a SyncRef UE may be avoided.

## Description

### FIELD

Various example embodiments relate to the field of telecommunication and in particular, to a method, a terminal device, an apparatus and a computer readable storage medium for evaluation period, detection period with allowed dropping rate and measurement period determination.

### BACKGROUND

In the communications area, there is a constant evolution ongoing in order to provide efficient and reliable solutions for utilizing wireless communication networks. Each new generation has it owns technical challenges for handling the different situations and processes that are needed to connect and serve devices connected to the wireless network. To meet the demand for wireless data traffic having increased since deployment of 4th generation (4G) communication systems, efforts have been made to develop an improved 5th generation (5G) or pre-5G communication system. The new communication systems can support various types of service applications for terminal devices.

In recent communication technologies, the R18 work item (RP-213678) on sidelink enhancements (SL-U is one critical part) was approved with some objectives related to SL-U, for example, Channel access mechanisms from NR-U shall be reused for sidelink unlicensed operation. Physical channel design framework: Required changes to NR sidelink physical channel structures and procedures to operate on unlicensed spectrum. The traditional NR sidelink and NR-U channel structure shall be reused as the baseline. No specific enhancements for traditional NR SL feature.

### SUMMARY

In general, example embodiments of the present disclosure provide a solution for evaluation period, detection period with allowed dropping rate and measurement period determination.

In a first aspect, there is provided a terminal device. The terminal device comprises at least one processor; and at least one memory including computer program codes; the at least one memory and the computer program codes are configured to, with the at least one processor, cause the device to measure a reference signal receiving power associated with a physical sidelink broadcast channel (PSBCH) of a reference device which is one of a plurality of synchronization reference devices; determine a number of consecutive periods associated with a listen before talk (LBT) failure in which a sidelink synchronization signal (SLSS) is unavailable from the reference device; and determine, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block (S-SSB) periods or a plurality of consecutive discontinuous reception (DRX) cycles.

In an implementation of the first aspect, the number of consecutive periods can be determined based on a priority level of the reference device for being a synchronization reference. The number of consecutive periods can be a first number, the reference device can be a first reference device, and the terminal device can be caused to determine the number of consecutive periods by, based on determining that the priority level of the reference device is lower than a priority level of a second reference device for being a synchronization reference, determining the first number less than a second number of consecutive periods associated with at least one LBT failure in which a SLSS is unavailable from the second reference device.

The number of consecutive periods can be determined based on a plurality of previous measured reference signals associated with the PSBCH of the reference device. The terminal device can be caused to determine the number of consecutive periods by determining an average value of the plurality of previous measured reference signals from the reference device, and determining, based on the average value, the number of consecutive periods. The number of consecutive periods can be a first number, the reference device can be a first reference device, the average value can be a first average value, and the terminal device can be further caused to determine the number of consecutive periods by determining that the first number is larger than a second number of consecutive periods associated with at least one LBT failure in which a SLSS is unavailable from a second reference device among the plurality of synchronization reference devices, wherein a second average value of a plurality of previous measured reference signals from the second reference device is less than the first average value. The number of consecutive periods can be a first number, the reference device can be a first reference device, the average value can be a first average value, and the terminal device can be further caused to determine the number of consecutive periods by determining that the first number is larger than a third number of consecutive periods associated with at least one LBT failure in which a SLSS is unavailable from a third reference device among the plurality of synchronization reference devices, wherein a third average value of a plurality of previous measured reference signals from the third reference device is equal to the first average value, and a moving speed of the third reference device is larger than a moving speed of the reference device. The terminal device can be further caused to receive configuration information for the number of the plurality of previous measured reference signals from the reference device. The number of consecutive periods can be determined based on clear channel assessment (CCA) information related to the channel access of the reference device. The CCA information can comprise status information associated with a consistent LBT failure on a band in which the S-SSB is transmitted. The terminal device can be further caused to determine, based on the status information, the consistent LBT failure is set on the band or is not set on the band. The terminal device can be caused to determine the number of consecutive periods by in the event that the consistent LBT failure is set on the band, determining, based on a time period during which the consistent LBT failure is set on the band, the number of consecutive periods. The terminal device can be caused to determine the number of consecutive periods by in the event that the consistent LBT failure is set on the band, determining the number of consecutive periods as 0, and switching from a first set of resource for receiving the S-SSB to a second set of resource. The terminal device can be caused to determine the consistent LBT failure is set on the band or is not set on the band by in the event that there is a first radio access technology (RAT) other than a new radio (NR) sidelink unlicensed (SL-U) RAT in the band, determining the consistent LBT failure is set on the band or is not set on the band. The terminal device can be caused to determine the number of consecutive periods by one of the following: in the event of absence of a first RAT other than a NR SL-U RAT in the band, determining the number of consecutive periods to be a value lower than a threshold or in the event that there is the first RAT and the consistent LBT failure is unset on the band, determining the number of consecutive periods to be the value lower than the threshold. The CCA information can further comprise an indication of whether there is the first RAT. The terminal device can be further caused to determine, based on the indication, whether there is the first RAT. The terminal device can be further caused to receive, from a network device or another terminal device different from the terminal device, the CCA information. The number of consecutive periods can be determined based on a quality of service (QoS) of the traffic associated with the reference device. The number of consecutive periods can be a first number, the reference device can be a first reference device, and the terminal device can be caused to determine the number of consecutive periods by, based on the QoS of the traffic associated with the reference device is higher than a QoS of the traffic associated with a second reference device, determining the first number larger than a second number of consecutive periods associated with at least one LBT failure in which a SLSS is unavailable from the second reference device. The number of consecutive periods can be determined based on a number of repetitions in frequency domain associated with the S-SSB. The terminal device can be further caused to determine the number of consecutive periods by, based on determining that the number of the plurality of repetitions is larger than a threshold, determining a first value as the number of consecutive periods, or based on determining that the number of the plurality of repetitions is less than or equal to the threshold, determining a second value as the number of consecutive periods, wherein the first value is less than the second value. The number of consecutive periods can be determined based on availability of a first S-SSB different from a second S-SSB comprising the PSBCH. The terminal device can be caused to determine the at least one of the evaluation period, the detection period or the measurement period by determining that at least one additional S-SSB occasion for the first S-SSB is configured, wherein the additional S-SSB occasion is different from at least one S-SSB occasion for evaluating the reference signal receiving power, determining that the at least one of the evaluation period, the detection period with allowed dropping rate and the measurement period of the reference signal receiving power for the at least one S-SSB occasion and the at least one additional S-SSB occasion is to be completed in less than a predetermined evaluation period, a predetermined detection period with allowed dropping rate and a predetermined measurement period, and determining part of the at least one of the predetermined evaluation period, the predetermined detection period with allowed dropping rate and the predetermined measurement period as the at least one of the evaluation period, the detection period with allowed dropping rate or the measurement period. The terminal device can be caused to determine the at least one of the evaluation period, the detection period with allowed dropping rate or the measurement period by determining one of the following: at least one additional S-SSB occasion for the first S-SSB is not configured, wherein the additional S-SSB occasion is different from at least one S-SSB occasion for evaluating the reference signal receiving power, or the at least one additional S-SSB occasion for the first S-SSB is configured, and the at least one of the evaluation period, the detection period with allowed dropping rate and the measurement period of the reference signal receiving power for the at least one S-SSB occasion and the at least one additional S-SSB occasion is not to be completed in less than at least one of a predetermined evaluation period, a predetermined detection period with allowed dropping rate or a predetermined measurement period, and determining at least one of an extended evaluation period, an extended detection period with allowed dropping rate and an extended measurement period as the at least one of the evaluation period, the detection period with allowed dropping rate and the measurement period, wherein the at least one of the extended evaluation period, the extended detection period with allowed dropping rate and the extended measurement period extends a plurality of S-SSB periods based on the at least one of the predetermined evaluation period, the detection period with allowed dropping rate or the measurement period. The number of the plurality of S-SSB periods can be associated with one of the following: a priority level of the reference device for being a synchronization reference, a plurality of previous measured reference signals associated with the PSBCH of the reference device, clear channel assessment (CCA) information related to the channel access of the reference device, a quality of service (QoS) of the traffic associated with the reference device, or a number of repetitions in frequency domain associated with the S-SSB. The determination of the at least one of the evaluation period, the detection period with allowed dropping rate or the measurement period can be used for selection or reselection of a reference device among the plurality of synchronization reference devices.

In a second aspect, there is provided a method. The method comprises measuring, at a terminal device, a reference signal receiving power associated with a physical sidelink broadcast channel (PSBCH) of a reference device which is one of a plurality of synchronization reference devices; determining a number of consecutive periods associated with a listen before talk (LBT) failure in which a sidelink synchronization signal (SLSS) is unavailable from the reference device; and determining, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block (S-SSB) periods or a plurality of consecutive discontinuous reception (DRX) cycles.

In a third aspect, there is provided an apparatus. The apparatus comprises means for measuring, at a terminal device, a reference signal receiving power associated with a physical sidelink broadcast channel (PSBCH) of a reference device which is one of a plurality of synchronization reference devices; means for determining a number of consecutive periods associated with a listen before talk (LBT) failure in which a sidelink synchronization signal (SLSS) is unavailable from the reference device; and means for determining, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block (S-SSB) periods or a plurality of consecutive discontinuous reception (DRX) cycles.

In a fourth aspect, there is provided a non-transitory computer readable medium comprising program instructions for causing an apparatus to perform at least the method according to the second aspect.

In a fifth aspect, there is provided a computer program comprising instructions, which, when executed by an apparatus, cause the apparatus at least to: measure a reference signal receiving power associated with a physical sidelink broadcast channel (PSBCH) of a reference device which is one of a plurality of synchronization reference devices; determine a number of consecutive periods associated with a listen before talk (LBT) failure in which a sidelink synchronization signal (SLSS) is unavailable from the reference device; and determine, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block (S-SSB) periods or a plurality of consecutive discontinuous reception (DRX) cycles.

In a sixth aspect, there is provided a terminal device. The terminal device comprises measuring circuitry configured to measure a reference signal receiving power associated with a physical sidelink broadcast channel (PSBCH) of a reference device which is one of a plurality of synchronization reference devices; determining circuitry configured to determine a number of consecutive periods associated with a listen before talk (LBT) failure in which a sidelink synchronization signal (SLSS) is unavailable from the reference device; and the determining circuitry further configured to determine, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block (S-SSB) periods or a plurality of consecutive discontinuous reception (DRX) cycles.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described, by way of example only, with reference to the accompanying drawings, in which:
Fig. 1A illustrates an example communication network in which embodiments of the present disclosure may be implemented;
Fig. 1B illustrates a clear channel assessment (CCA) slot according to some example embodiments of the present disclosure;
Fig. 1C illustrates an acquisition of channel occupancy time by an initiating device via LBT Type 1 according to some example embodiments of the present disclosure;
**Error! Reference source not found.** Fig. 1E and Fig. 1F illustrate some examples of behaviour during the contention window countdown procedure according to some example embodiments of the present disclosure;
Fig. 1G illustrates some allowed gaps for which LBT Type 2 variant to be applicable according to some example embodiments of the present disclosure;
Fig. 1H illustrates SLSS ID and inCoverage indicator in SL Sync chain according to some example embodiments of the present disclosure;
Fig. 1I illustrates an example of S-SSB unavailable at UE during an evaluation period, a detection period with allowed dropping rate or a measurement period due to LBT failure at SyncRef UE;
Fig. 2 illustrates a flowchart illustrating a method for determining at least one of an evaluation period, a detection period with allowed dropping rate or a measurement period according to some embodiments of the present disclosure;
Fig. 3 illustrates an exemplary process of at least one of an evaluation period, a detection period with allowed dropping rate or a measurement period determination based on the priority of the synchronization source of the SyncRef UE according to some example embodiments of the present disclosure;
Fig. 4 illustrates an exemplary process of at least one of an evaluation period, a detection period with allowed dropping rate or a measurement period determination based on the previously measured PSBCH-RSRP value of SyncRef UE according to some example embodiments of the present disclosure;
Figs. 5 and 6 illustrate some exemplary processes of at least one of an evaluation period, a detection period with allowed dropping rate or a measurement period determination based on information about CCA failures according to some example embodiments of the present disclosure;
Fig. 7 illustrates an exemplary process of at least one of an evaluation period, a detection period with allowed dropping rate or a measurement period determination based on availability of additional S-SSB according to some example embodiments of the present disclosure;
Fig. 8 illustrates an exemplary process of at least one of an evaluation period, a detection period with allowed dropping rate or a measurement period determination based on QoS profile of the traffic according to some example embodiments of the present disclosure;
Fig. 9 illustrates an exemplary process of at least one of an evaluation period, a detection period with allowed dropping rate or a measurement period determination based on number of S-PSS/S-SSS/PSBCH repeated in frequency domain according to some example embodiments of the present disclosure;
Fig. 10 illustrates a simplified block diagram of an apparatus that is suitable for implementing embodiments of the present disclosure; and
Fig. 11 illustrates a block diagram of an example computer readable medium in accordance with some embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions), and
(c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or Enb), a NR NB (also referred to as a Gnb), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

The requirements for UE is disclosed in Table 1, when the SyncRef UE as a synchronization reference source subject to CCA(i.e., LBT procedure). The sidelink UE shall be capable of measuring the PSBCH-RSRP of the selected SyncRef UE used as synchronization reference source and evaluate it to initiate/cease SLSS transmissions within the evaluation period T_{evaluate,SLSS}, as shown in Table 1.

**Table 1**

| **SL-DRX cycle^{Note 1} [ms]** | | **T_{evaluate,SLSS} [ms]** |
|---|---|---|
| No SL-DRX | | 4 × S-SSB periods |
| SL-DRX cycle ≤ 160ms | | 4 × S-SSB periods |
| SL-DRX cycle > 160ms | | 4 × SL-DRX cycle |
| Note 1: | If multiple SL-DRX cycles are configured for SL UE, the SL-DRX cycle in the requirement is the shortest one. When the shortest SL-DRX cycle UE used changes, the requirements do not apply to the time of transition. | |

The sidelink UE shall also be capable of measuring the PSBCH-RSRP for identifying newly detectable intra-frequency SyncRef UE within T_{detect,SyncRef UE_V2X} and T_{measure,PSBCH-RSRP} during which the UE shall be capable of performing PSBSCH-RSRP measurements of 3 identified intra-frequency SyncRef UEs.

However, the transmission of SLSS from SyncRef UE in unlicensed band is subject to CCA and is not always guaranteed. That may need to be considered by the sidelink UE measuring PSBCH-RSRP, and changes on an evaluation period, a detection period with allowed dropping rate and a measurement period requirement may be needed. Since the LBT failures from SyncRef UE when attempting to transmit S-SSB may cause the sidelink UE measuring PSBCH-RSRP to determine incorrectly the initiation/cease of SLSS transmissions, or incorrect selection/reselection of SyncRef UE, incorrect identification of newly detectable syncRef UE(s) and incorrect measurement for performing PSBCH-RSRP of identified intra-frequency SyncRef UE(s).

Some possible issues if the traditional procedure is reused are: Wrong initiation of SLSS transmission event though a better SyncRef UE (e.g., higher priority sync source) is available nearby; Wrong reselection to a different SyncRef UE even though a better SyncRef UE is available nearby; Wrong identification of newly detectable syncRef UE(s) even though a better SyncRef UE is available nearby; Incorrect measurement for performing PSBCH-RSRP of identified intra-frequency SyncRef UE(s).

Requirements for SyncRef UE as synchronization reference source is that extending the measurement period to 4+x S-SSB periods, x is the S-SSB periods in which the SLSS is not available due to LBT failures, and is capped by x_max. FFS for detailed description and x_max.

Requirements for Tdetect, SyncRef UE_V2X and allowed drop rate are 1) extending the detection period considering S-SSB not available due to LBT failure during the detection period; 2) allowed Tx dropping rate and Rx dropping rate, and/or 3) Maximum allowed LBT failure.

For SL DRX and SL non-DRX case, it will be addressed based on above requirements 1) to 3).

Requirement for T_{measure, PSBCH-RSRP} is that T_{measure,PSBCH-RSRP} during which the UE shall be capable of performing PSBSCH-RSRP measurements of 3 identified intra-frequency SyncRef UEs is defined as blow Table 1-1 as a starting point. y is the S-SSB periods in which the SLSS is not available due to LBT failures and FFS for detailed description and y_max which is capped.

**Table 1-1**

| SL-DRX cycle [ms] | T_{measure, PSBCH-RSRP} [ms] |
|---|---|
| No SL-DRX | (2 + y) *160 |
| SL-DRX cycle ≤ 160ms | (2 + y) * 160 |
| SL-DRX cycle > 160ms | (2 + y) *SL-DRX cycle |

However, it is not clear how x for evaluation period, extended period for detection period and y for measurement period should be determined. It is not clear for how long S-SSB may not be available as CCA failures may be unpredictable, depending on the deployment and load on the spectrum. And in some cases just extending S-SSB will not help either (e.g. if there has been consistent LBT failures in the S-SSB channel waiting extending the evaluation period, the detection period with associated allowed dropping rate and the measurement period would not help much, or moving to alternative SyncRef UE which may not be suffering LBT issues, or if sync priority of alternative SyncRef is as good as current SyncRef, then may be better to change then to extend the evaluation period, the detection period and the measurement period). In the present disclosure, a solution for at least one of the evaluation period, the detection period with associated allowed dropping rate or the measurement period determination is provided.

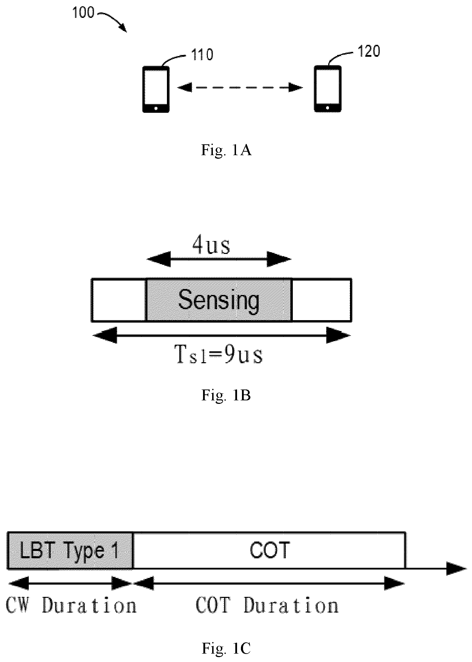

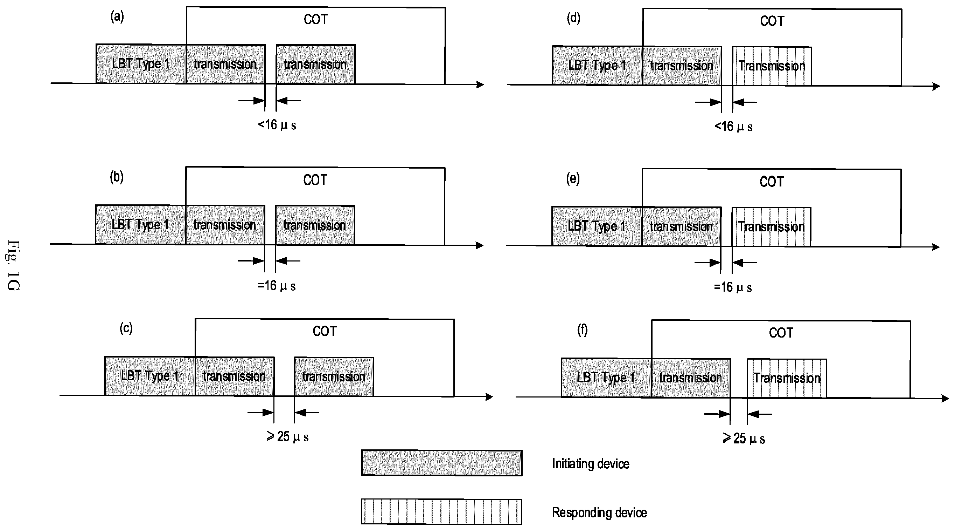

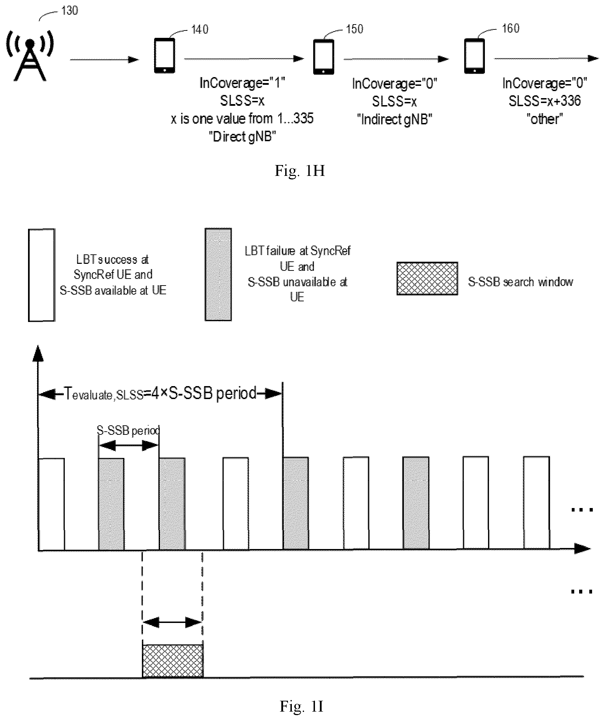

Principles and embodiments of the present disclosure will be described in detail below with reference to the accompanying drawings. Reference is first made to Fig. 1A, which illustrates an example communication system 100 in which embodiments of the present disclosure may be implemented. The system 100 includes a plurality of terminal devices, such as a terminal device 110 and a terminal device 120. In some examples, the terminal device 120 may be a synchronization reference (SyncRef) terminal device (for example a SyncRef UE), and the terminal device 110 may receive a PSBCH from the terminal device 120. There may be a plurality of other terminal devices (not shown in Fig. 1A) as synchronization reference terminal devices, and the terminal device 110 may also receive PSBCHs from plurality of other terminal devices respectively.

The system 100 also includes one or more network devices (not shown in Fig. 1A), the one or more network devices may communicate with the terminal devices above.

It is to be understood that the number of network devices and terminal devices is only for the purpose of illustration without suggesting any limitations. The system 100 may include any suitable number of network devices and terminal devices adapted for implementing embodiments of the present disclosure.

Communications in the communication system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

The sidelink enhancements (SL-U is one critical part) may be considered with the following objectives related to SL-U, which are shown in the text box below.

| | | | |
|---|---|---|---|
| Study and specify support of sidelink on unlicensed spectrum for both mode 1 and mode 2 where Uu operation for mode 1 is limited to licensed spectrum only | | | |
| | - Channel access mechanisms from NR-U shall be reused for sidelink unlicensed operation | | |
| | | o Assess the applicability of sidelink resource reservation from Rel-16/Rel-17 to sidelink unlicensed operation within the boundaries of unlicensed channel access mechanism and operation | |
| | | | ▪ No specific enhancements for Rel-17 resource allocation mechanisms |
| | | | ▪ If the existing NR-U channel access framework does not support the required SL-U functionality, WGs will make appropriate recommendations for RAN approval. |
| | - Physical channel design framework: Required changes to NR sidelink physical channel structures and procedures to operate on unlicensed spectrum | | |
| | | o The existing NR sidelink and NR-U channel structure shall be reused as the baseline. | |
| | - No specific enhancements for existing NR SL feature | | |

In sub-7GHz unlicensed bands, the new radio (NR) coexistence with other systems (e.g. IEEE 802.11) is ensured via a Listen Before Talking (LBT) channel access mechanism. Where, a user equipment (UE) intending to perform a sidelink (SL) transmission needs first to successfully complete an LBT check, before being able to initiate that same transmission. LBT can also be referred as Clear Channel Assessment (CCA) or channel access procedure. For a UE to pass an LBT check then it must observe the channel as available for a number of consecutive CCA slots. In sub-7GHz the duration of these slots is 9 µs, as depicted in **Error! Reference source not found.B.** The UE deems the channel as available in a CCA slot if the measured power (i.e. the collected energy during the CCA slot) is below a regulatory specified threshold (which can depend on the operating band and geographical region).

When a UE initiates the communication (i.e. the UE takes the role of initiating device), then this UE has to acquire the "right" to access the channel for a certain period of time - denoted in the regulations as the Channel Occupancy Time (COT) - by applying an "extended" LBT procedure where the channel must be deemed as free for the entire duration of a Contention Window (CW). This "extended" LBT procedure, is commonly known as LBT Type 1 as specified in TS 37.213. Fig. 1C illustrates an acquisition of channel occupancy time by an initiating device via LBT Type 1 according to some example embodiments of the present disclosure. As shown in Fig. 1C, if a LBT Type 1 in a CW duration is successful, the initiating device will acquire the "right" to access the channel for a COT duration.

The duration of both the COT and CW depends on the Channel Access Priority Class (CAPC) associated with the UE's traffic, as shown in **Error! Reference source not found.** (Channel Access Priority Class (CAPC) for UL). Control plane traffic (such as PSCCH) is transmitted with p=1, while user plane traffic has p>1. In Table 2, we depict the LBT Type 1 details for the Uu uplink (UL) case, but we note that the downlink (DL) case LBT Type 1 parameters could also in principle be adopted in SL. The contention window length in CCA slots associated with each CAPC has a minimum **(*CW***_{***min***,}***ₚ*)** and maximum **(*CW_{max,p}*)*.*** The duration of the COT is given by ***T_{ulm cot, p}.***

**Table 2**

| **Channel Access Priority Class (*p*)** | ***mₚ*** | ***CW_{min,p}*** | ***CW_{max, p}*** | ***T_{ulm cot, p}*** | **allowed *CWₚ* sizes** |
|---|---|---|---|---|---|
| 1 | 2 | 3 | 7 | 2 ms | {3,7} |
| 2 | 2 | 7 | 15 | 4ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |
| NOTE1: For p = 3,4, *T_{ulm cot, p}* = 10ms if the higher layer parameter *absenceOfAnyOtherTechnology-r14* or *absenceOfAnyOtherTechnology-r16* is provided, otherwise, *T_{ulm cot, p}* = 6*ms*. | | | | | |
| NOTE 2: When *T_{ulm cot, p}* = 6*ms* it may be increased to 8*ms* by inserting one or more gaps. The minimum duration of a gap shall be 100us. The maximum duration before including any such gap shall be 6*ms*. | | | | | |

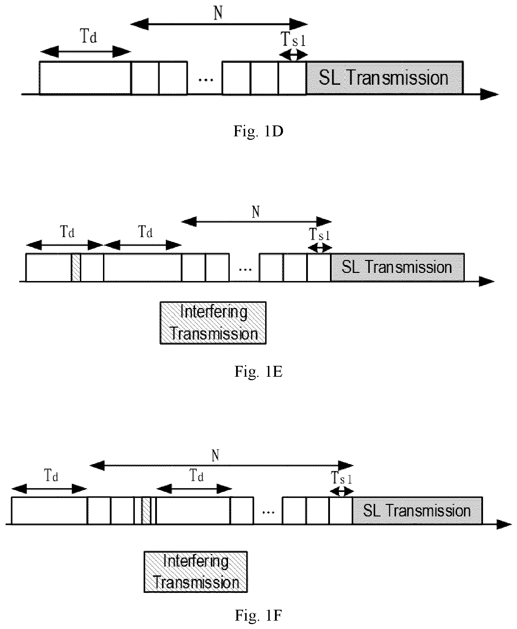

Examples of behavior during the contention window countdown procedure are depicted in **Error! Reference source not found.** Fig. 1E and Fig. 1F. Note that if during the countdown procedure the LBT check fails in any CCA slot, then the countdown will stop and will only resume if the channel is deemed as free (i.e. the LBT check is successful) during a defer time. Fig. 1D shows when neither the defer time nor the countdown are disrupted (i.e. the channel is not detected as busy during a sensing slot). Fig. 1E shows the defer time is disrupted (i.e. the channel is detected as busy during a defer time sensing slot). Fig. 1F shows the contention window count down is disrupted (i.e. the channel is detected as busy during a sensing slot of the countdown). It should be Noted that T_{d} refers to the defer time, Tₛₗ to the CCA slot duration and N to the number of CCA slots required to be deemed as free before the contention window countdown is complete.

The UE initiating the transmission (the initiating device) upon successfully completing the LBT Type 1 and performing a transmission, acquires the COT with duration associated with the corresponding CAPC. The acquired COT is valid even in the case where the initiating device pauses its transmission, although if the initiating device wants to perform a new transmission (within the COT) it is still required to perform a "reduced" LBT procedure. This "reduced" LBT procedure, is commonly known as LBT Type 2 [TS 37.213], with the following variants:

Type 2A (25 µs LBT) - for SL transmissions within the initiating device acquired COT (in case the gap between two SL transmissions is ≥ 25 µs, as well for SL transmissions following another SL transmission), depicted in scenarios (c) and (f) of **Error! Reference source not found.;**

Type 2B (16 µs LBT) - for SL transmission within the initiating device acquired COT (can only be used for SL transmissions following another SL with gap exactly equal to 16 µs), depicted in scenarios (b) and (e) of **Error! Reference source not found.;**

Type 2C (no LBT) - can only be used for SL transmission following another SL, with a gap < 16 µs and the allowed duration of the SL transmission ≤ 584 µs), depicted in scenarios (a) and (d) of **Error! Reference source not found..**

Scenarios (a), (b). and (c) shows the case where the gap is between the two transmissions both from the initiating UE, while scenarios (d), (e), and (f) show the case that the gap is between the two different transmissions from the initiating UE and the responding UE correspondingly).

The initiating device can share its acquired COT with its intended receiver (the responding device). For this purpose, the initiating device shall inform (e.g. via control signaling) the responding device about the duration of this COT. The responding device uses then this information to decide which type of LBT it should apply upon performing a transmission for which the intended receiver is the initiating device. In case the responding device transmission falls outside the COT, then the responding device will have to acquire a new COT using the LBT Type 1 with the appropriate CAPC.

SL transmissions are organized in frames identified by the direct frame number (DFN). The DFN enables a UE to synchronize its radio frame transmissions according to the SL timing reference. UEs perform SL synchronization to have the same SL timing reference for SL communication among nearby UEs by synchronizing with a reference. There are four sources for synchronization reference (SyncRef): GNSS, NR Cell (gNB), EUTRAN Cell (eNB), SyncRef UE or UE's own internal clock. A UE that is acting as SyncRef source is referred as a SyncRef UE. The SyncRef UE either extend the sync coverage of a SyncRef source (e.g., GNSS, gNB/eNB or another SyncRef UE) or uses its own internal clock as the SyncRef, and broadcasts SL sync information to provide Syncref to the UEs in the vicinity.

A SyncRef UE transmits SL sync information in sidelink synchronization signal block (S-SSB) to provide SyncRef. This information carried in S-SSB consists of: S-PSS, S-SSS and PSBCH. Here, S-PSS and S-SSS are jointly referred to as the sidelink synchronization signal (SLSS) and are used for time and frequency synchronization. The S-PSS and S-SSS are selected out of the candidate sequences based on an SLSS ID which represents an identifier of the SyncRef UE and conveys a priority of the SyncRef UE. PSBCH carries MIB-SL which includes DFN, slot index and one-bit indicator *inCoverage* which indicates whether or not the SyncRef UE is in coverage of a network or of GNSS.

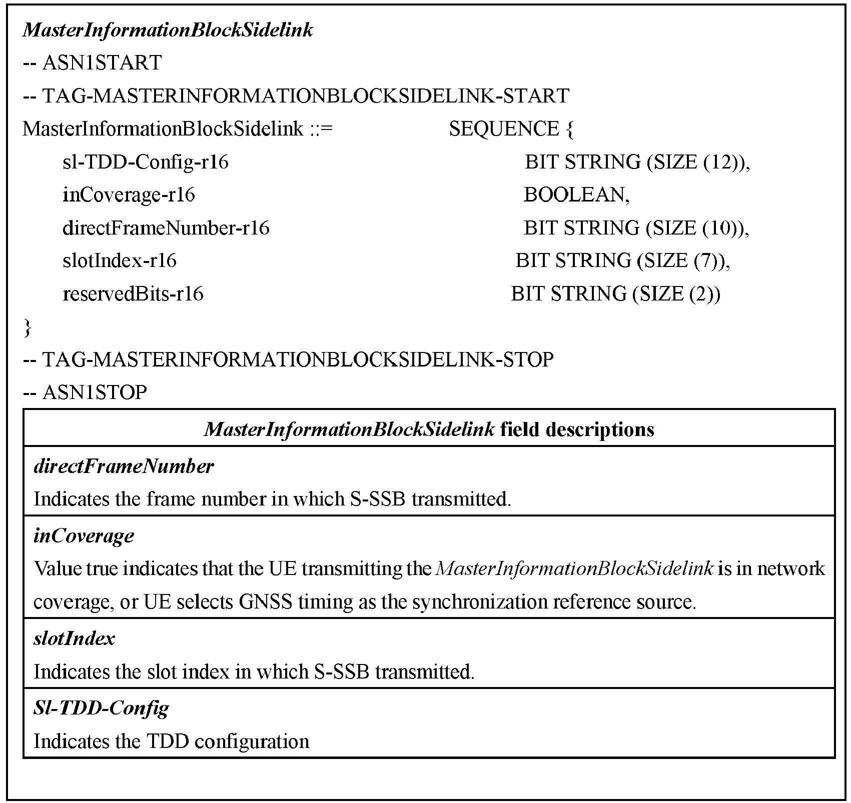

The S-SSBs are transmitted by SyncRef UEs with a fixed periodicity of 160ms (i.e. 16 radio frames). Within each S-SSB period, multiple S-SSBs can be transmitted, and the number of S-SSBs transmitted is (pre-)configured depending on the SCS and the frequency range. The UE shall select the slot in which to transmit S-SSB according to S-SSB time allocation (sl-SSB-TimeAllocation1 or sl-SSB-TimeAllocation2) which provides time-offset (sl-TimeOffsetSSB) from the start of the SL SSB period to the first S-SSB, slot interval (sl-TimeInterval) between two neighboring S-SSBs if there are more than one S-SSBs within one S-SSB period, and number of S-SSB transmissions (Sl-NumSSB-WithinPeriod) within one S-SSB period.

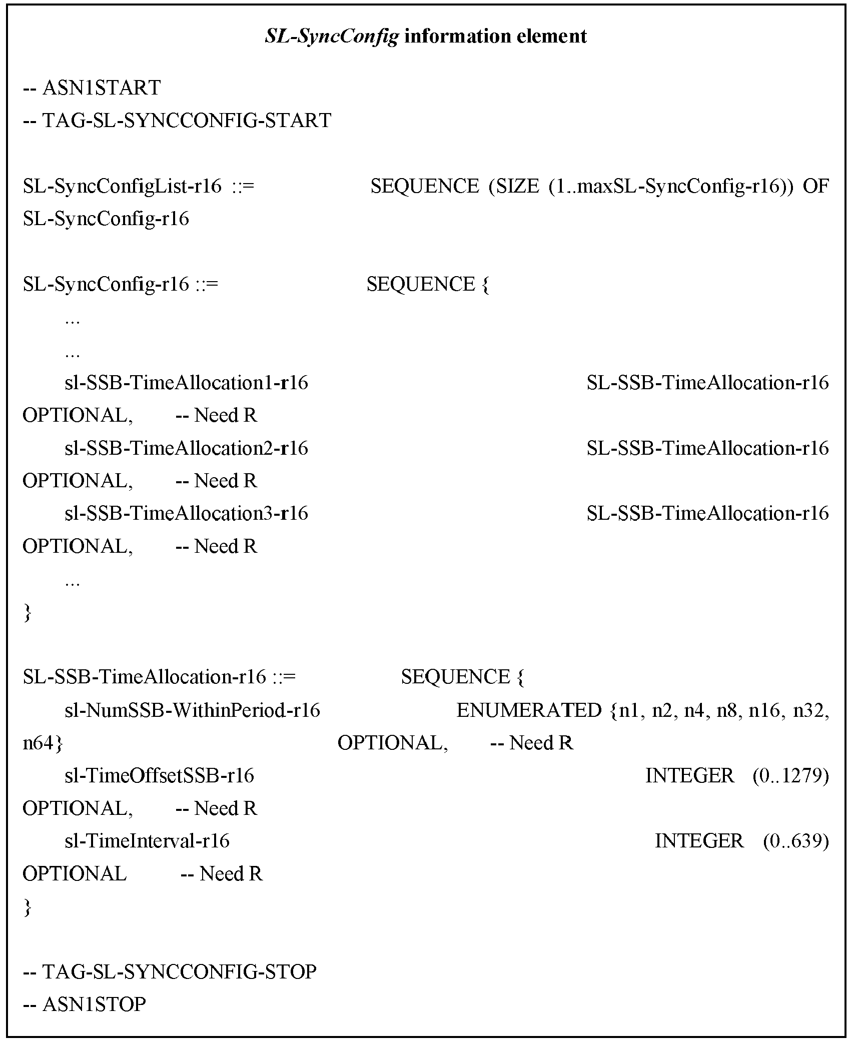

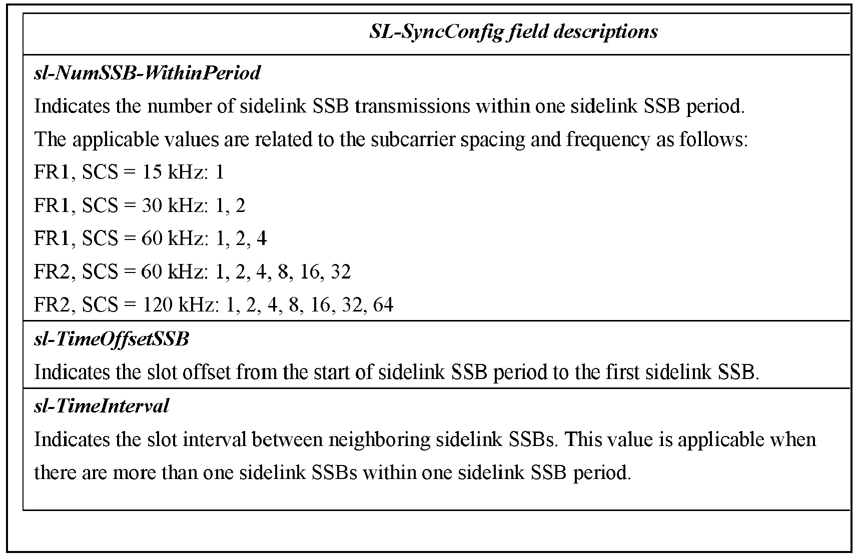

AUE determines to act as SyncRef UE, i.e. transmits SL sync information (S-SSB), mainly if [TS 38.331, Section 5.8.5.2]: it is explicitly configured by the gNB e.g. by setting networkControlledSyncTx IE to true for when RRC_CONNECTED; RSRP is measurement is above syncTxThreshIC (if configured) when in-coverage; PSBCH-RSRP is above syncTxThreshOoC (if configured) when out-of-coverage.

| **5.8.5.2 Initiation** | | | |
|---|---|---|---|
| A UE capable of NR sidelink communication and SLSS/PSBCH transmission shall, when transmitting NR sidelink communication, and if the conditions for NR sidelink communication operation are met and when the following conditions are met: | | | |
| | 1> if in coverage on the frequency used for NR sidelink communication, as defined in TS 38.304 [20]; and has selected GNSS or the cell as synchronization reference as defined in 5.8.6.3; or | | |
| | 1> if out of coverage on the frequency used for NR sidelink communication, and the frequency used to transmit NR sidelink communication is included in *sl-FreqInfoToAddModList* in *sl-ConfigDedicatedNR* within *RRCReconfiguration* message or included in *sl-FreqInfoList* within *SIB12*; and has selected GNSS or the cell as synchronization reference as defined in 5.8.6.3: | | |
| | | 2> if in RRC_CONNECTED; and if *networkControlledSyncTx* is configured and set to *on*; *or* | |
| | | 2> if *networkControlledSyncTx* is not configured; and for the concerned frequency *syncTxThreshIC* is configured; and the RSRP measurement of the reference cell, selected as defined in 5.8.6.3, for NR sidelink communication transmission is below the value of *syncTxThreshIC*: | |
| | | | 3> transmit sidelink SSB on the frequency used for NR sidelink communication in accordance with 5.8.5.3 and TS 38.211 [16], including the transmission of SLSS as specified in 5.8.5.3 and transmission of MasterInformationBlockSidelink as specified in 5.8.9.4.3; |
| | 1> else: | | |
| | | 2> for the frequency used for NR sidelink communication, if *syncTxThreshOoC* is included in *SidelinkPreconfigNR*; and the UE is not directly synchronized to GNSS, and the UE has no selected SyncRef UE or the PSBCH-RSRP measurement result of the selected SyncRef UE is below the value of *syncTxThreshOoC*; or | |
| | | 2> for the frequency used for NR sidelink communication, if the UE selects GNSS as the synchronization reference source: | |
| | 3> transmit sidelink SSB on the frequency used for NR sidelink communication in accordance with TS 38.211 [16], including the transmission of SLSS as specified in 5.8.5.3 and transmission of *MasterInformationBlockSidelink* as specified in 5.8.9.4.3; | | |

The SLSS ID selection at the SyncRef UE is described in TS 38.331 Section 5.8.5.3. For example, in case of out-of-coverage and when extending the coverage of first SyncRef UE, a second SyncRef UE uses the same SLSS ID = x of the first other SyncRef UE when the first SyncRef UE is in-coverage of gNB (i.e. S-SSB from first SyncRef UE indicates inCoverage IE is set to true in MIB-S and SLSS ID is in 1..335) or SLSS= 336+x when first SyncRef UE is two-hop away from gNB (i.e. S-SSB from first SyncRef UE indicates inCoverage IE is set to false in MIB-S and its SLSS ID x is in 1..335) as shown in **Error! Reference source not found.H,** wherein x is the SLSS ID of the first SyncRef UE. When the first SyncRef UE is in-coverage of gNB, the first SyncRef UE may be UE 140, and the second SyncRef UE may be UE 150. When first SyncRef UE is two-hop away from gNB, the first SyncRef UE may be UE 150, and the second SyncRef UE may be UE 160. The gNB may be an example of a network device 130.

(Re)Selection of Synchronization Reference at a UE is described below. A UE selects its SyncRef based on the different priorities of the sources as summarized in Table 3 (where P0 to P6 correspond to highest to lowest priorities, respectively) depending whether it is a GNSS-based synchronization (GNSS as the highest priority) or gNB/eNB-based synchronization (gNB/eNB has the highest priority).

**Table 3**

| **Priority Group** | **GNSS-based synchronization** | **gNB/eNB-based synchronization** |
|---|---|---|
| P0 | GNSS | gNB/eNB |
| P1 | UE directly synchronized to GNSS (SyncRef UE in network coverage and directly synchronized to GNSS, i.e., with inCoverage =1 and SLSS ID={0}) | UE directly synchronized to gNB/eNB (SyncRef UE directly synchronized to gNB/eNB, i.e., with inCoverage =1 and with SLSS ID={1,...,335}) |
| P2 | UE indirectly synchronized to GNSS (SyncRef UE out of GNSS/network coverage and one hop away from GNSS, i.e., with inCoverage =0 and SLSS ID={0}) | UE indirectly synchronized to gNB/eNB (SyncRef UE out of GNSS/network coverage and one hop away from a gNB/eNB, i.e., with inCoverage =0 and with SLSS ID={1,...,335}) |
| P3 | gNB/eNB | GNSS |
| P4 | UE directly synchronized to gNB/eNB (SyncRef UE directly synchronized to a gNB/eNB, i.e., with inCoverage =1 and with SLSS ID={1,...,335}) | UE directly synchronized to GNSS (SyncRef UE directly synchronized to GNSS, i.e., with inCoverage =1 and SLSS ID={0}) |
| P5 | UE indirectly synchronized to gNB/eNB (SyncRef UE out of GNSS/network coverage and one hop away from a gNB/eNB, i.e., with inCoverage =0 and with SLSS ID={1,...,335}) | UE indirectly synchronized to GNSS (SyncRef UE out of GNSS/network coverage and one hop away from GNSS, i.e., with inCoverage =0 and SLSS ID={0}) |
| P6 | the remaining UEs have the lowest priority (including UE's own internal clock; SyncRef UE out of GNSS/network coverage and two or more hops away from a gNB/eNB or GNSS, i.e., with inCoverage =0 and with SLSS ID={336,337,...,671}) | |

As captured in Table 3, a UE selects gNB/eNB or GNSS with highest priority (Priority level 0). When the UE selects GNSS as the SyncRef source, the DFN, the subframe number within a frame and slot number within a frame used for NR SL communication are derived from the current coordinated universal time (UTC) provided by the GNSS [TS 38.331 Sect. 5.8.12]. Whereas the system frame number (SFN) which provides an indexing of the frames based on the cell timing reference can be used to derive the DFN if UE selects gNB/eNB as the SyncRef source.

When there is no gNB/eNB or GNSS available as SyncRef source, a UE performs a full search (i.e., covering all subframes and all possible SLSSIDs) to detect candidate SLSS to look for SyncRef UEs. It is noted, by detecting the SLSS sent by a SyncRef UE, a UE can synchronize to the SyncRef UE and estimate the beginning of the frame and carrier frequency. Upon successful SLSS detection, a UE proceeds with decoding the PSBCH. If the UE has not selected a SyncRef UE as the source and multiple candidate SyncRef UEs (or SLSS IDs) are detected for which the PSBCH-RSRP exceeds the minimum requirement by sl-SyncRefMinHyst and the corresponding MIB-SL is successfully received, the UE chooses the SyncRef UE with the highest PSBCH-RSRP as the source considering the priority levels given in Table 3. If the UE already has selected a SyncRef UE as the source, the UE still performs reselection of SyncRef UE if:
PSBCH-RSRP of the strongest candidate SyncRef UE exceeds the minimum requirement by sl-SyncRefMinHyst and the strongest candidate SyncRef UE belongs to the same priority group as the current SyncRef UE and the PSBCH-RSRP of the strongest candidate SyncRef UE exceeds the PSBCH-RSRP of the current SyncRef UE by syncRefDiffHyst; or
PSBCH-RSRP of the candidate SyncRef UE exceeds the minimum requirement by sl-SyncRefMinHyst and the candidate SyncRef UE belongs to a higher priority group than the current SyncRef UE; or
PSBCH-RSRP of the current SyncRef UE is less than the minimum requirement.

When a UE selects SyncRef UE as the source, it makes use of SL sync information carried in S-SSB transmitted by the SyncRef UE for synchronization.

The conditions for SLSS transmissions specified in TS 38.331[2] are met and when SyncRef UE is used as synchronization reference source and if syncTxThreshOoC is included in the preconfigured V2X parameters.

As mentioned above, the UE may be capable of measuring the PSBCH-RSRP of the selected SyncRef UE used as synchronization reference source and evaluate it to initiate/cease SLSS transmissions within the evaluation period T_{evaluate,SLSS} shown in Table 1. As shown in Fig. 1I, S-SSB is unavailable at UE during evaluation period due to LBT failure at SyncRef UE.

Also, for the (re)selection of Synchronization Reference Source the UE shall be capable of performing PSBCH-RSRP measurements for 3 identified intra-frequency SyncRef UE with the measurement period of T_{measure,PSBCH-RSRP} in Table 4. It is assumed that the SyncRef UE do not drop or delay any SLSS transmission within the measurement period. Otherwise, the measurement period may be extended.

**Table 4**

| **SL-DRX cycle^{Note 1} [ms]** | | **T_{measure,PSBCH-RSRP} [ms]** |
|---|---|---|
| No SL-DRX | | 320 |
| SL-DRX cycle ≤ 160ms | | 320 |
| SL-DRX cycle > 160ms | | 2 × SL-DRX cycle |
| Note 1: | If multiple SL-DRX cycles are configured, the SL-DRX cycle is the shortest one. | |

When GNSS synchronization reference source is configured as the highest priority and UE is synchronized to a SyncRef UE that is synchronized to GNSS directly or in-directly, the UE shall not drop any V2X data transmission for the purpose of selection/reselection to the SyncRef UE. The UE shall be able to identify newly detectable intra-frequency SyncRef UE within T_{detect,SyncRef UE_V2X} seconds if the SyncRef UE meets the selection / reselection criterion defined in TS 38.331. T_{detect,SyncRef UE_V2X} is defined as 1.6 seconds at S-SSB Ês/Iot ≥ 0 dB, provided that the UE is allowed to drop a maximum of 30% of its SLSS transmissions during T_{detect,SyncRef UE_V2X} for the purpose of selection / reselection to the SyncRef UE.

When UE is in non-SL-DRX, the UE shall be able to identify newly detectable intra-frequency SyncRef UE within T_{detect,SyncRef UE_V2X} seconds if the SyncRef UE meets the selection / reselection criterion defined in TS 38.331. T_{detect,SyncRef UE_V2X} is defined as 8 seconds at S-SSB Ês/Iot ≥ 0 dB, provided that the UE is allowed to drop a maximum of 6 % of its V2X data and SLSS transmissions during T_{detect,SyncRef UE_V2X} for the purpose of selection / reselection to the SyncRef UE. UE is allowed to drop up to 2 slots of its V2X data reception per PSBCH monitoring occasion and overall drop rate shall not exceed 0.3% of its V2X data reception during T_{detect,SyncRef UE_V2X} for the purpose of selection / reselection to the SyncRef UE.

When UE is in SL-DRX, the UE shall be able to identify newly detectable intra-frequency SyncRef UE within T_{detect,SyncRef UE_V2X} seconds if the SyncRef UE meets the selection / reselection criterion defined in TS 38.331. T_{detect,SyncRef UE_V2X} is defined as 8 seconds at S-SSB Ês/Iot ≥ 0 dB, provided that the V2X UE is allowed to drop a maximum of 6 % of its V2X data and SLSS transmissions for the purpose of selection / reselection to the SyncRef UE. UE is allowed to drop up to 2 slots of its V2X data reception per PSBCH monitoring occasion and UE is allowed to drop at most an aggregated window of 24ms of its V2X data reception during T_{detect,SyncRef UE_V2X} for the purpose of selection / reselection to the SyncRef UE. The UE is allowed to extend T_{detect,SyncRef UE_V2X} to max(4 × 50 SL-DRX cycle length, 8s) when the following conditions are satisfied over an evaluation period T_{evaluate,SLSS} in clause 12.3.1.1 if an NR cell is used as synchronization reference source, or T_{evaluate,SLSS} in clause 12.3.1.2 if an EUTRA cell is used as synchronization reference source, or T_{evaluate,SLSS} in clause 12.3.1.4 if an SLSS is used as synchronization reference source. If multiple SL-DRX cycles are configured, the SL-DRX cycle length is the longest one. When serving cell/PCell synchronization reference source is configured as the highest priority.

In the embodiments of the present disclosure, at least one of the evaluation period requirement, the detection period requirement or the measurement period may be defined for the terminal device 110 (e.g. a sidelink UE, or referred as receiver UE) measuring the PSBCH-RSRP of selected/detected/identified synchronization reference (SyncRef) device (for example the terminal device 120, specifically, a SyncRef UE). When transmission of SLSS from the SyncRef device is subject to CCA failure in the unlicensed band of operation. The procedure for determination of the evaluation period extension can be likewise applied for determination of the measurement period or the detection period extension.

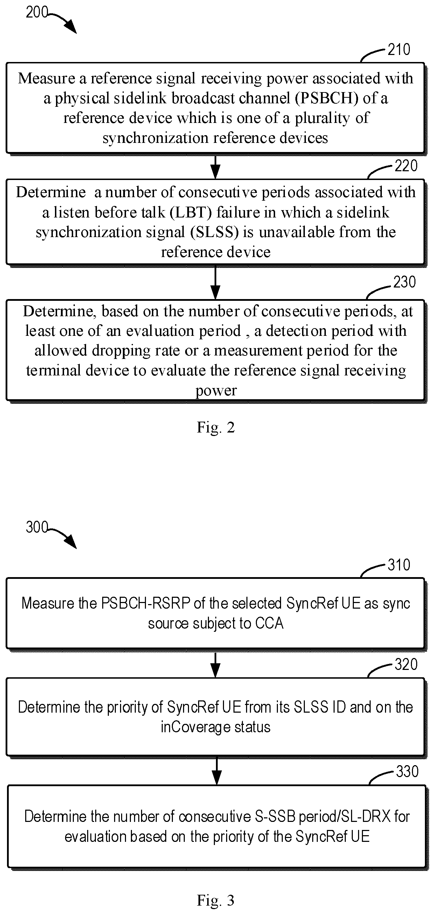

Reference is now made to Fig. 2, which shows a method 200 for determining at least one of an evaluation period, a detection period with allowed dropping rate or a measurement period according to some embodiments of the present disclosure. For the purpose of discussion, the method 200 will be described with reference to Fig. 1A. The method 200 may involve the terminal device 110 and the terminal device 120 as illustrated in Fig. 1A, and the terminal device 120 may be a reference device which is one of a plurality of synchronization reference devices. It would be appreciated that although the method 200 for determining an evaluation period has been described in the communication system 100 of Fig. 1A, this process may be likewise applied to other communication scenarios where the terminal device 110 determining the evaluation period.

In method 200, the terminal device 110 may measure (210) a reference signal receiving power associated with a physical sidelink broadcast channel (PSBCH) of a reference device which is one of a plurality of synchronization reference devices. Then the terminal device 110 may determine (220) a number of consecutive periods associated with a listen before talk (LBT) failure in which a sidelink synchronization signal (SLSS) is unavailable from the reference device. The consecutive periods may correspond to a plurality of consecutive sidelink synchronization signal block (S-SSB) periods or a plurality of consecutive discontinuous reception (DRX) cycles.

As mentioned above, the evaluation period requirement is defined for sidelink UE measuring the PSBCH-RSRP of selected SyncRef UE, when transmission of SLSS from SyncRef UE is subject to CCA failure in the unlicensed band of operation. For example, the sidelink UE may determine the evaluation period based on one or more below: priority level of synchronization source, previous measured values of PSBCH-RSRP of SyncRef UE, information about CCA failures, availability of additional S-SSB, QoS characteristics of the traffic, or the number of S-PSS/S-SSS/PSBCH repeated in frequency domain (to meet OCB (occupied channel bandwidth) requirement). The evaluation period T_{evaluate,SLSS_CCA} determined based on one or more method above may be (4+Mi) S-SSB periods or (4+M₂) SL-DRX cycles, and the one or more method above may be used for determine M₁ or M₂ to determine the evaluation period. The details will be described below.

The measurement period defined in 38.133 needs to accommodate for LBT failure at the SyncRef UE and needs to extend the measurement period subject to CCA. The UE shall be able to evaluate, measure, detect whether a newly detectable, identified SyncRef UE meets the reselection, identification criteria defined within:
T_{evaluate,SLSS_CCA}, where T_{evaluate,SLSS_CCA} is (4+Mi) S-SSB periods and (4+M₂) SL-DRX cycles.
T_{measure, PSBCH-RSRP}, where T_{measure, PSBCH-RSRP} is (2+M₁) S-SSB periods and (2+M₂) SL-DRX cycles.
T_{detect,SyncRef UE_V2X}, where T_{detect,SyncRef UE_V2X} which is (1.6 + M₁) seconds and (8 + M₁) seconds for allowed SL transmission dropping rate of (30+M₁)% and (6+M₁)% and up to (2+ M₁) slots of SL data reception per S-SSB monitoring occasion with maximum overall drop rate of (0.3 + M₁)% for purpose of selection/reselection of SyncRef UE for both UE in SL-DRX and non SL-DRX case, when UE is synchronized to a SyncRef UE that is synchronized to GNSS/serving cell/pCell directly or in-directly.

M₁ is the number of consecutive S-SSB periods and M₂ is the number of consecutive SL-DRX cycles in which the SLSS is not available due to LBT failures during the evaluation/measurement/detection period. Take the evaluation period T_{evaluate,SLSS_CCA} for example, M₁ is capped by Mi,max, and M₂ is capped by M_{2,max} respectively. Where M_{1,max} and M_{2,max} is configurable and their values are given by the maximum number of consecutive S-SSB period and SL-DRX cycles in which SLSS is not available at the UE during T_{evaluate,SLSS_CCA}.

M₁ or M₂ above is an example of a number of consecutive periods associated with a listen before talk (LBT) failure in which a sidelink synchronization signal (SLSS) is unavailable from the reference device. As shown in Table 5, T_{evaluate,SLSS_CCA} when SyncRef UE is used as synchronization reference source when subject to CCA may be as below:

**Table 5**

| **SL-DRX cycle^{Note 1} [ms]** | | **T_{evaluate,SLSS_CCA} [ms]** |
|---|---|---|
| No SL-DRX | | (4 + M₁) × S-SSB periods |
| SL-DRX cycle ≤ 160ms | | (4 + M₁) × S-SSB periods |
| SL-DRX cycle > 160ms | | (4 + M₂) × SL-DRX cycle |
| Note 1: | If multiple SL-DRX cycles are configured for SL UE, the SL-DRX cycle in the requirement is the shortest one. When the shortest SL-DRX cycle UE used changes, the requirements do not apply to the time of transition. | |
| Note 2: | M₁ and M₂ is the number of consecutive S-SSB period and SL-DRX cycles in which SLSS is not available at the UE during T_{evaluate,SLSS_CCA} and M₁ < M_{1,max} and M₂ < M_{2,max}. | |
| Note 3: | M_{1,max} and M_{2,max} is the maximum number of consecutive S-SSB period and SL-DRX cycles in which SLSS is not available at the UE during T_{evaluate,SLSS_CCA}. | |

Based on Table 5, for the consecutive periods corresponding to a plurality of consecutive sidelink synchronization signal block (S-SSB) periods, the number of consecutive periods is M₁. For the consecutive periods corresponding to a plurality of consecutive discontinuous reception (DRX) cycles, the number of consecutive periods is M₂.

In the embodiments of the present disclosure, different methods on how to determine the value of M₁, M₂, M_{1,max} and M_{2,max} are proposed to appropriately relax the evaluation period. Refer to various embodiments below.

In some embodiments, the number of consecutive periods is determined based on a priority level of the reference device for being a synchronization reference. For the priority levels, refer to the Table 3 above. The number of consecutive periods may be referred to as a first number, and the reference device may be referred to as a first reference device. In order to determine the number of consecutive periods, the terminal device 110 may, based on determining that the priority level of the reference device is lower than a priority level of a second reference device for being a synchronization reference, determine the first number less than a second number of consecutive periods associated with at least one LBT failure in which a SLSS is unavailable from the second reference device. These embodiments may further refer to solution 1 below.

As an example (solution 1), Fig. 3 illustrates an exemplary process of at least one of an evaluation period, a detection period with allowed dropping rate or a measurement period determination based on the priority of the synchronization source of the SyncRef UE according to some example embodiments of the present disclosure. Just take the evaluation period determination as an example below. It should be noted that, the process 300 is also applicable for the detection period determination or the measurement period determination. In process 300, at 310, the UE (an example of the terminal device 110, also may be referred as receiver UE) may measure the PSBCH-RSRP of the selected SyncRef UE (an example of the terminal device 120) as sync source subject to CCA. At 320, the UE may determine the priority of SyncRef UE from its SLSS ID and on the inCoverage status. At 330, the UE may determine the number of consecutive S-SSB period/SL-DRX for evaluation based on the priority of the SyncRef UE.

With reference to Fig. 3, the value of M (Mi or M₂) may be determined based on the priority of the synchronization source of the SyncRef UE. The priority of the SyncRef UE is determined based on the synchronization source with which SyncRef UE is synced with, as indicated in Table 3. If the priority of one SyncRef is higher than another SyncRef UE, then the number of consecutive S-SSB period/SL-DRX cycle that the UE will wait is more for the SyncRef UE with the higher priority level. Also, the number of consecutive S-SSB period/SL-DRX cycle M₁, M₂, M_{1,max} and M_{2,max} are configurable and value of M_{1,max} and M_{2,max} are based on the highest priority level of SynRef UE.

For example, the evaluation period requirement to measure the PBSCH-RSRP is defined to be 4 S-SSB period/SL DRX cycle, and if the UE is (pre)configured for GNSS based synchronization source and the value of both M_{1,max} and M_{2,max} are configured as 8, which is the case when SyncRef UE in network coverage and directly synchronized to GNSS i.e., priority Level 2. Now, if the receiver UE is evaluating the SLSS from the SyncRef UE which is out of GNSS/network coverage and one hop away from GNSS i.e., of priority level 3, its evaluation period could be extended by M₁ or M₂ = 6 S-SSB periods or SL-DRX cycles, which is less than the M_{1,max} or M_{2,max} = 8. Similarly, if the receiver UE is evaluating the SLSS from the SyncRef UE which is directly synchronized to gNB/eNB i.e., of priority level 5, its evaluation period could be extended by M₁ or M₂ = 4 S-SSB periods or SL-DRX cycles, which is less than the M_{1,max} or M_{2,max} = 8. Same example is valid for detection and measurement period requirement.

In some embodiments, the number of consecutive periods may be determined based on a plurality of previous measured reference signals associated with the PSBCH of the reference device. Specifically, the terminal device 110 may determine an average value of the plurality of previous measured reference signals from the reference device, and then determine, based on the average value, the number of consecutive periods.

In some examples, the number of consecutive periods may be referred to as a first number, the reference device may be referred to as a first reference device, the average value may be referred to as a first average value, and in these examples, in order to determine the number of consecutive periods, the terminal device 110 may determine that the first number is larger than a second number of consecutive periods associated with at least one LBT failure in which a SLSS is unavailable from a second reference device among the plurality of synchronization reference devices. A second average value of a plurality of previous measured reference signals from the second reference device is less than the first average value.

Additionally, determination of the number of consecutive periods may be related to mobility profile of the reference device. Specifically, in some other examples, in order to determine the number of consecutive periods, the terminal device 110 may determine that the first number is larger than a third number of consecutive periods associated with at least one LBT failure in which a SLSS is unavailable from a third reference device among the plurality of synchronization reference devices, wherein a third average value of a plurality of previous measured reference signals from the third reference device is equal to the first average value, and a moving speed of the third reference device is larger than a moving speed of the reference device.

In some embodiments, the number of the plurality of previous measured reference signals may be configurable. For example, the terminal device 110 may receive configuration information for the number of the plurality of previous measured reference signals from the reference device.

These embodiments (the number of consecutive periods is determined based on the plurality of previous measured reference signals) may further refer to solution 2 below.

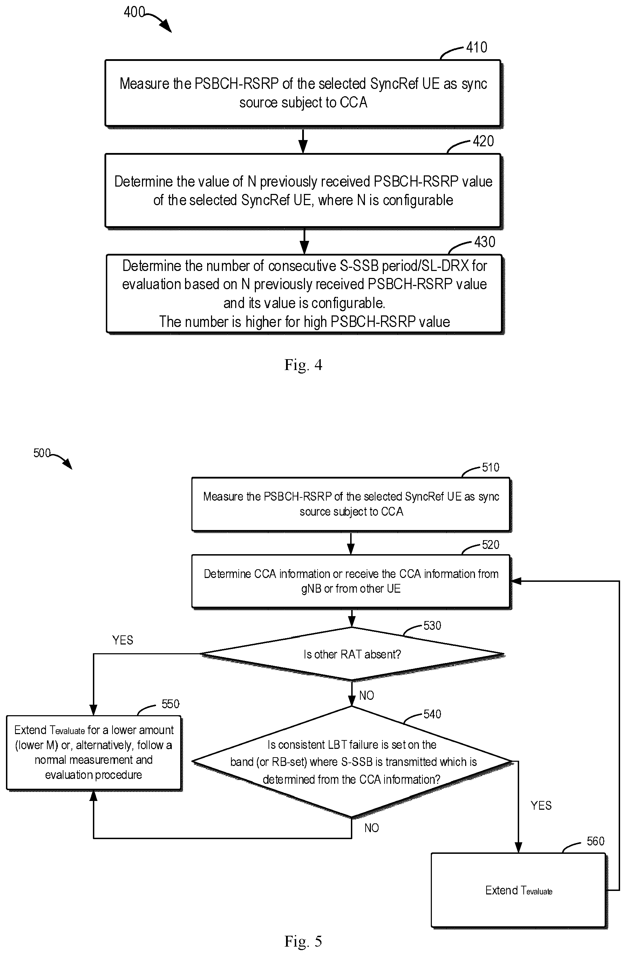

As an example (solution 2), Fig. 4 illustrates an exemplary process of at least one of an evaluation period, a detection period with allowed dropping rate or a measurement period determination based on the previously measured PSBCH-RSRP value of SyncRef UE according to some example embodiments of the present disclosure. Just take the evaluation period determination as an example below. It should be noted that, the process 400 is also applicable for the detection period determination or the measurement period determination. In process 400, at 410, the UE may measure the PSBCH-RSRP of the selected SyncRef UE as sync source subject to CCA. At 420, the UE may determine the value of N previously received PSBCH-RSRP value of the selected SyncRef UE, where N is configurable. At 430, the UE may determine the number of consecutive S-SSB period/SL-DRX for evaluation based on N previously received PSBCH-RSRP value and its value is configurable. The number is higher for high PSBCH-RSRP value.

With reference to Fig. 4, the UE determines the value of evaluation period T_{evaluate,SLSS_CCA} subject to CCA and corresponding values of M₁ = M_{1,max} and M₂ = M_{2,max} based on the N previously received PSBCH-RSRP value of the SyncRef UE, for higher value of average PSBCH-RSRP value M₁, M₂ would be higher in comparison to lower value of average PSBCH-RSRP. The evaluating UE can also consider its mobility profile while determining the M₁, M₂ and the number over which previously received PSBCH-RSRP is averaged i.e., N; since for the high mobility scenario the previous values of PSBCH-RSRP will age out earlier than the low mobility scenario; the probability of the SyncRef UE in vicinity of evaluating UE will also go down.

For example, if the average of N previously measured PSBCH-RSRP value -5dBm and in another instance if it is -10dBm, then the assumed values could be M₁=6 or M₂=6 when the PSBCH-RSRP value is -5dBm, and Mi=3 or M₂=3 when the PSBCH-RSRP value is -10dBm. i.e. (M (M₁ or M₂) corresponding to the value -5dBm > M (Mi or M₂) corresponding to the value -10dBm). Same example is valid for detection and measurement period requirement.

In some embodiments, the number of consecutive periods may be determined based on clear channel assessment (CCA) information related to the channel access of the reference device. Specifically, the CCA information may be information about CCA failures, and the CCA information may comprise status information associated with a consistent LBT failure on a band in which the S-SSB is transmitted. In some examples, based on the status information, the terminal device 110 may determine the consistent LBT failure is set on the band or is not set on the band.

In some embodiments, in the event that the consistent LBT failure is set on the band, the terminal device 110 may determine, based on a time period during which the consistent LBT failure is set on the band, the number of consecutive periods. With reference to Fig. 5 below, at 550, the UE extends Tₑᵥₐₗᵤₐₜₑ, and the Tₑᵥₐₗᵤₐₜₑ may be extends by at least the time period above, in other words, the evaluation period should be further extended at least until the time when consistent LBT failure unset.

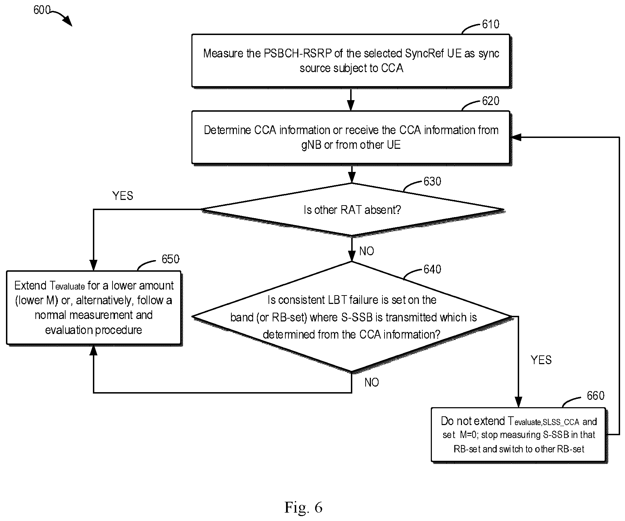

In some other embodiments, in the event that the consistent LBT failure is set on the band, the terminal device 110 may determine the number of consecutive periods as 0, and may switch from a first set of resource for receiving the S-SSB to a second set of resource. With reference to Fig. 6 below, i.e. at 660, the UE may not extend T_{evaluate,SLSS_CCA} and set M=0, and stop measuring S-SSB in that RB-set (a first set of resource) and switch to other RB-set (a second set of resource).

The terminal device 110 may receive the CCA information from a network device or another terminal device different from the terminal device 110. As mentioned above, the CCA information may comprise status information associated with a consistent LBT failure on a band in which the S-SSB is transmitted. In some embodiments, the CCA information may further comprises an indication of whether there is the first RAT. At the terminal device 110, the terminal device 110 may determine, based on the indication, whether there is the first RAT.

In some examples, in the event that there is a first radio access technology (RAT) other than a new radio (NR) sidelink unlicensed (SL-U) RAT in the band, the terminal device 110 determines the consistent LBT failure is set on the band or is not set on the band. In some examples, in order to determine the number of consecutive periods, specifically, in the event of absence of a first RAT other than a NR SL-U RAT in the band, the terminal device 110 determines the number of consecutive periods to be a value lower than a threshold. Alternatively, in the event that there is the first RAT and the consistent LBT failure is unset on the band, the terminal device 110 determines the number of consecutive periods to be the value lower than the threshold.

These embodiments (the number of consecutive periods is determined based on the CCA information) may further refer to solution 3 below.

As an example (solution 3), Figs. 5 and 6 illustrate some exemplary processes of at least one of an evaluation period, a detection period with allowed dropping rate or a measurement period determination based on information about CCA failures according to some example embodiments of the present disclosure. Just take the evaluation period determination as an example below. It should be noted that, the process 500 or 600 is also applicable for the detection period determination or the measurement period determination. As shown in Fig. 5, in process 500, at 510, the UE may measure the PSBCH-RSRP of the selected SyncRef UE as sync source subject to CCA. At 520, the UE may determine CCA information or receive the CCA information from gNB or from other UE. At 530, the UE may determine whether there is other RAT absent, if there is other RAT absent, then 550 is performed; if there is no other RAT absent, then 540 is performed. The other RAT may be a RAT different from a new radio (NR) sidelink unlicensed (SL-U) RAT. At 540, the UE may determine whether consistent LBT failure is set on the band (or RB-set) where S-SSB is transmitted which is determined from the CCA information, if yes, then 560 is performed, or if no, then 550 is performed. At 550, the UE may extend Tₑᵥₐₗᵤₐₜₑ for a lower amount (lower M) or, alternatively, follow a normal measurement and evaluation procedure. At 560, the UE may extend Tₑᵥₐₗᵤₐₜₑ.

As shown in Fig. 6, in process 600, the steps 610-650 are the same as the steps 510-550 respectively, the steps 610-650 may refer to steps 510-550. At 660, the UE may not extend T_{evaluate,SLSS_CCA} and set M=0, and stop measuring S-SSB in that RB-set and switch to other RB-set.

With reference to Fig. 5 and Fig 6, the UE determines the value of evaluation period T_{evaluate,SLSS_CCA} subj ect to CCAand corresponding values of M1, M₂, M_{1,max} and M_{2,max} based on information about CCA failures. The information may be determined by the UE itself or received from gNB or other UE.

The information may include status about consistent LBT failures on the band (or RB-set) where S-SSB is transmitted (consistent LBT failure may be determined if LBT fails consecutively for a certain amount or for a certain time in a transmission band). In case there is consistent LBT failure determined, the UE may not further extend the evaluation period for measuring S-SSB in the RB-set. For example, the M values are set to 0 up to the time when consistent LBT failure status is unset. The UE may potentially switch to measure PSBCH-RSRP in another RB-set if that is available for S-SSB. Alternatively, the evaluation period should be further extended at least until the time when consistent LBT failure unset, e.g., by a timer, or indication from other UE or gNB. The information may also include indication whether there is absence of other RAT (Radio Access Technology) in the band where S-SSB is transmitted (e.g., there is no WiFi deployed in the same area and band). In that case, evaluation period may not be further extended, given that the lack of S-SSB may not be due to CCA issues, therefore the UE should fall back to normal measurement and evaluation procedure. Same example is valid for detection and measurement period requirement.

In some embodiments, the number of consecutive periods may be determined based on availability of a first S-SSB different from a second S-SSB comprising the PSBCH.

Specifically, in order to determine the evaluation period, in some examples, the terminal device 110 may determine that at least one additional S-SSB occasion for the first S-SSB is configured, wherein the additional S-SSB occasion is different from at least one S-SSB occasion for evaluating the reference signal receiving power, the terminal device 110 may further determine that the evaluation of the reference signal receiving power for the at least one S-SSB occasion and the at least one additional S-SSB occasion is to be completed in less than a predetermined evaluation period, and then the terminal device 110 may determine part of the predetermined evaluation period as the evaluation period.

In some other examples, in order to determine the evaluation period, the terminal device 110 may determine at least one additional S-SSB occasion for the first S-SSB is not configured, wherein the additional S-SSB occasion is different from at least one S-SSB occasion for evaluating the reference signal receiving power, alternatively, the terminal device 110 may determine the at least one additional S-SSB occasion for the first S-SSB is configured, and the evaluation of the reference signal receiving power for the at least one S-SSB occasion and the at least one additional S-SSB occasion is not to be completed in less than a predetermined evaluation period. Then the terminal device 110 may determine an extended evaluation period as the evaluation period, the extended evaluation period extends a plurality of S-SSB periods based on the predetermined evaluation period.

The number of the plurality of S-SSB periods may be associated with one of various aspects, such as a priority level of the reference device for being a synchronization reference, a plurality of previous measured reference signals associated with the PSBCH of the reference device, clear channel assessment (CCA) information related to the channel access of the reference device, a quality of service (QoS) of the traffic associated with the reference device, or a number of repetitions in frequency domain associated with the S-SSB. The method of determination of the number of the plurality of S-SSB periods may refer to any of the solutions 1,2,3,5, and 6. The predetermined evaluation period may be Tₑᵥₐₗᵤₐₜₑ, with reference to Table 2, Tₑᵥₐₗᵤₐₜₑ is 4 × S-SSB periods. The plurality of S-SSB periods may be M1 or M2, for example, the extended evaluation period may refer to the Table 5, the extended evaluation period T_{evaluate,SLSS_CCA} is (4 + M₁) × S-SSB periods, or (4 + M₂) × SL-DRX cycle. By determine M₁ or M₂ based on the method in solutions 1,2,3,5, and 6, and then the extended evaluation period may be determined. These embodiments may further refer to solution 4 below.

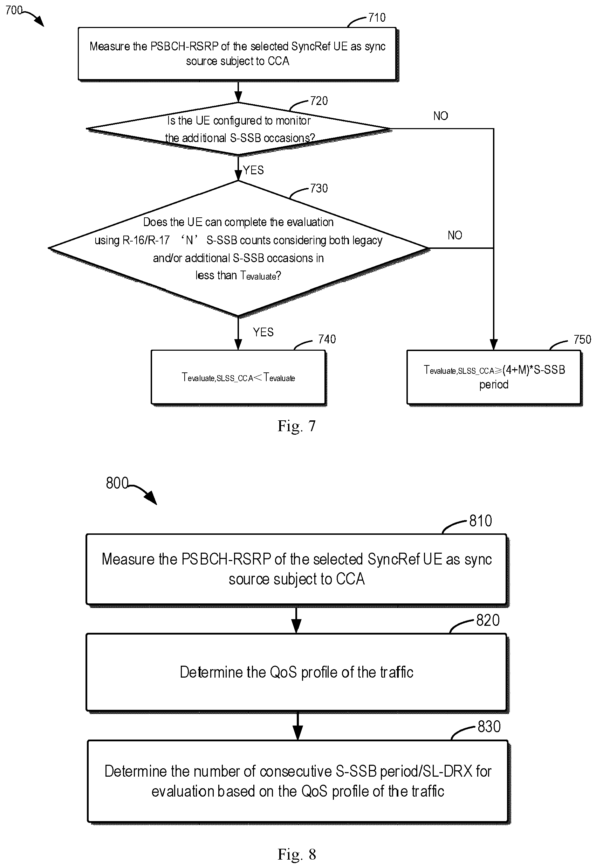

As an example (solution 4), Fig. 7 illustrates an exemplary process of at least one of an evaluation period, a detection period with allowed dropping rate or a measurement period determination based on availability of additional S-SSB according to some example embodiments of the present disclosure. Just take the evaluation period determination as an example below. It should be noted that, the process 700 is also applicable for the detection period determination or the measurement period determination. As shown in Fig. 7, in process 700, at 710, the UE may measure the PSBCH-RSRP of the selected SyncRef UE as sync source subject to CCA. At 720, the UE may determine whether the UE is configured to monitor the additional S-SSB occasions. If the UE is configured to monitor the additional S-SSB occasions, then 730 is performed, otherwise, 750 is performed. At 730, the UE may determine whether the UE can complete the evaluation using R-16/R-17 'N' S-SSB counts considering both legacy and/or additional S-SSB occasions in less than Tₑᵥₐluate. If yes, 740 is performed, or if no, 750 is performed. At 740, T_{evaluate,SLSS_CCA} < Tₑᵥₐₗᵤₐₜₑ. At 750, T_{evaluate,SLSS_CCA}≥(4+M)*S-SSB period.

With reference to Fig. 7, the UE will determine the value of evaluation period T_{evaluate,SLSS_CCA} based on availability of additional S-SSBs in time or frequency occasion, if they are configured for SL operation in unlicensed to cope with the potential CCA failures.

In this case the UE may measure a number N of S-SSBs counting the periodic legacy S-SSBs occasions and additional S-SSBs within a period which may be shorter or equal (4+M) × S-SSB periods. For example, if N is configured to be 4, the UE is required to measure up to 4 legacy and/or additional S-SSBs in total, not required to use the full extended evaluation period. In other words, the terminal device 110 (the UE in this example) determines part of the predetermined evaluation period as the evaluation period. Same example is valid for detection and measurement period requirement.

In some embodiments, the number of consecutive periods is determined based on a quality of service (QoS) of the traffic associated with the reference device. In some examples, the number of consecutive periods may be referred to as a first number, the reference device may be referred to as a first reference device, and in the process of determination of the number of consecutive periods, the terminal device 110 may determine, based on the QoS of the traffic associated with the reference device is higher than a QoS of the traffic associated with a second reference device, the first number larger than a second number of consecutive periods associated with at least one LBT failure in which a SLSS is unavailable from the second reference device. These embodiments may further refer to solution 5 below.

As an example (solution 5), Fig. 8 illustrates an exemplary process of at least one of an evaluation period, a detection period with allowed dropping rate or a measurement period determination based on QoS profile of the traffic according to some example embodiments of the present disclosure. Just take the evaluation period determination as an example below. It should be noted that, the process 800 is also applicable for the detection period determination or the measurement period determination. As shown in Fig. 8, in process 800, at 810, the UE may measure the PSBCH-RSRP of the selected SyncRef UE as sync source subject to CCA. At 820, the UE may determine the QoS profile of the traffic. At 830, the UE may determine the number of consecutive S-SSB period/SL-DRX for evaluation based on the QoS profile of the traffic.

With reference to Fig. 8, the UE will determine the value of evaluation period T_{evaluate,SLSS_CCA} subject to CCA and corresponding values of M₁, M₂, M_{1,max} and M_{2,max} based on the QoS profile of the traffic i.e., Packet Delay budget (PDB), Packet Error Rate (PER), etc. and priority of SyncRef UE for high QoS traffic. The evaluating UE could wait for more number of S-SSB period/SL-DRX cycle when the priority of SyncRef UE and QoS requirement of the traffic is high, since the high priority level SyncRef UE could provide better Synchronization which is better suited for high QoS traffic. For example, for the PDB of 20ms and PER of 10⁻⁴ the M₁, M₂ = 6 and for the PDB of 40ms and PER of 10⁻⁸ the M₁, M₂ = 8. Same example is valid for detection and measurement period requirement.

In some embodiments, the number of consecutive periods may be determined based on a number of repetitions in frequency domain associated with the S-SSB. In different cases, the number of repetitions in frequency domain associated with the S-SSB may be the number of S-PSS/S-SSS/PSBCH repeated in frequency domain, etc. In some examples, in order to determine the number of consecutive periods, the terminal device 110 may determine, based on determining that the number of the plurality of repetitions is larger than a threshold, a first value as the number of consecutive periods; or determine, based on determining that the number of the plurality of repetitions is less than or equal to the threshold, a second value as the number of consecutive periods, wherein the first value is less than the second value. In other words, if the plurality of repetitions is larger than a threshold, then the terminal device 110 determines the number of consecutive periods as a lower value, otherwise, the terminal device 110 determines the number of consecutive periods as a larger value. These embodiments may further refer to solution 6 below.

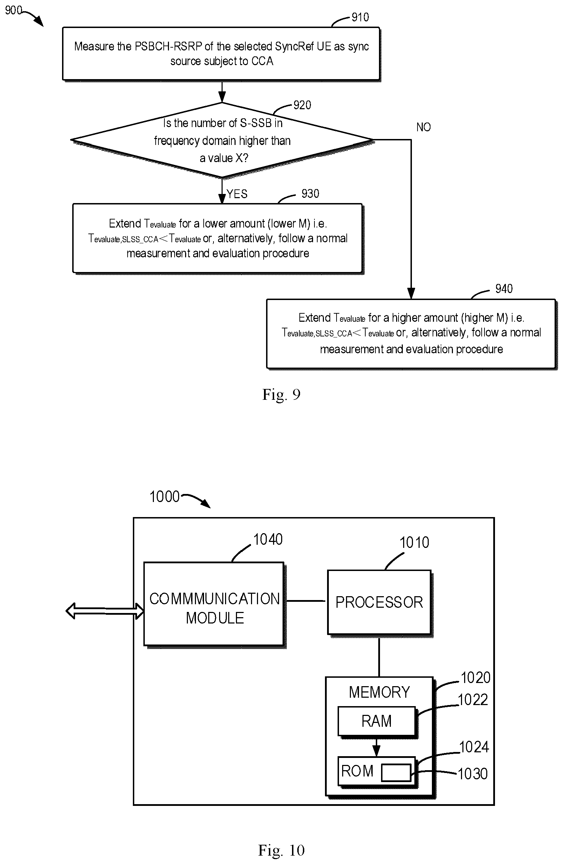

As an example (solution 6), Fig. 9 illustrates an exemplary process of at least one of an evaluation period, a detection period with allowed dropping rate or a measurement period determination based on number of S-PSS/S-SSS/PSBCH repeated in frequency domain according to some example embodiments of the present disclosure. Just take the evaluation period determination as an example below. It should be noted that, the process 900 is also applicable for the detection period determination or the measurement period determination. As shown in Fig. 9, in process 900, at 910, the UE may measure the PSBCH-RSRP of the selected SyncRef UE as sync source subject to CCA. At 920, the UE may whether the number of S-SSB in frequency domain is higher than a value X, if yes, then 930 is performed, otherwise, if no, then 940 is performed. At 930, the UE may extend Tₑᵥₐₗᵤₐₜₑ for a lower amount (lower M) i.e. T_{evaluate,SLSS_CCA} < Tₑᵥₐₗᵤₐₜₑ or, alternatively, follow a normal measurement and evaluation procedure. At 940, the UE may extend Tₑᵥₐₗᵤₐₜₑ for a higher amount (higher M) i.e. T_{evaluate,SLSS_CCA} < Tₑᵥₐₗᵤₐₜₑ or, alternatively, follow a normal measurement and evaluation procedure.

With reference to Fig. 9, the UE will determine the value of evaluation period T_{evaluate,SLSS_CCA} based on the number of S-PSS/S-SSS/PSBCH repeated in frequency domain. In one time domain S-SSB occasion, S-PSS/S-SSS/PSBCH may be repeated multiple times in frequency domain to meet the occupied channel bandwidth (OCB) requirement. The measuring UE can combine these frequency domain copies of S-PSS/S-SSS/PSBCH to improve the detection performance. Evaluation period could be shorter when repetition of legacy S-PSS/S-SSS/PSBCH in frequency domain is configured. It should be noted that due to PSD limit in unlicensed spectrum, the Tx power of single copy of S-PSS/S-SSS/PSBCH is limited, and higher Tx power can be used when S-PSS/S-SSS/PSBCH is repeated in frequency domain.

An example can be different values of M are determined depending on the number of repetitions of S-SSB are available in frequency domain. e.g., for S-SSB in 1 RB-sets, then M₁= 4. For S-SSB in 2 RB-sets, then M₁= 3, etc., i.e., M can be lowered depending on the number of frequency domain repetitions of S-SSB. Frequency domain repetitions may also be configured within one RB set. Same example is valid for detection and measurement period requirement.

Based on mentioned in the embodiments, after determining the number of consecutive periods associated with a listen before talk (LBT) failure in which a sidelink synchronization signal (SLSS) is unavailable from the reference device, the terminal device 110 may determine (230), based on the number of consecutive periods, at least one of an evaluation period, a detection period with allowed dropping rate or a measurement period for the terminal device 110 to evaluate the reference signal receiving power. For example, the evaluation period for the terminal device 110 to evaluate the reference signal receiving power may be T_{evaluate,SLSS_CCA} above, and may be determined based on the methods mentioned in the embodiments above.

In some embodiments, an apparatus capable of performing any of the method 200 (for example, the terminal device 110) may comprise means for performing the respective steps of the method 200. The means may be implemented in any suitable form. For example, the means may be implemented in a circuitry or software module.

In some embodiments, the apparatus comprises means for measuring a reference signal receiving power associated with a physical sidelink broadcast channel (PSBCH) of a reference device which is one of a plurality of synchronization reference devices; means for determining a number of consecutive periods associated with a listen before talk (LBT) failure in which a sidelink synchronization signal (SLSS) is unavailable from the reference device; and means for determining, based on the number of consecutive periods, at least one of an evaluation period, a detection period with allowed dropping rate or a measurement period for the terminal device 110 to evaluate the reference signal receiving power, wherein the consecutive periods correspond to a plurality of consecutive sidelink synchronization signal block (S-SSB) periods or a plurality of consecutive discontinuous reception (DRX) cycles.

In some embodiments, the number of consecutive periods is determined based on a priority level of the reference device for being a synchronization reference.

In some embodiments, the number of consecutive periods is a first number, the reference device is a first reference device, and the means for determining the number of consecutive periods comprises means for being based on determining that the priority level of the reference device is lower than a priority level of a second reference device for being a synchronization reference, determining the first number less than a second number of consecutive periods associated with at least one LBT failure in which a SLSS is unavailable from the second reference device.

In some embodiments, the number of consecutive periods is determined based on a plurality of previous measured reference signals associated with the PSBCH of the reference device.

In some embodiments, means for determining the number of consecutive periods comprises means for determining an average value of the plurality of previous measured reference signals from the reference device and means for determining, based on the average value, the number of consecutive periods.

In some embodiments, the number of consecutive periods is a first number, the reference device is a first reference device, the average value is a first average value, and the means for determining the number of consecutive periods may comprise means for determining that the first number is larger than a second number of consecutive periods associated with at least one LBT failure in which a SLSS is unavailable from a second reference device among the plurality of synchronization reference devices, in which a second average value of a plurality of previous measured reference signals from the second reference device is less than the first average value.

In some embodiments, the number of consecutive periods is a first number, the reference device is a first reference device, the average value is a first average value, and the means for determining the number of consecutive periods comprises means for determining that the first number is larger than a third number of consecutive periods associated with at least one LBT failure in which a SLSS is unavailable from a third reference device among the plurality of synchronization reference devices, in which a third average value of a plurality of previous measured reference signals from the third reference device is equal to the first average value, and a moving speed of the third reference device is larger than a moving speed of the reference device.

In some embodiments, the apparatus further comprises means for receiving configuration information for the number of the plurality of previous measured reference signals from the reference device.

In some embodiments, the number of consecutive periods is determined based on clear channel assessment (CCA) information related to the channel access of the reference device.

In some embodiments, the CCA information comprises status information associated with a consistent LBT failure on a band in which the S-SSB is transmitted.

In some embodiments, the apparatus further comprises means for determining, based on the status information, the consistent LBT failure is set on the band or is not set on the band.

In some embodiments, the means for determining the number of consecutive periods comprises means for in the event that the consistent LBT failure is set on the band, determining, based on a time period during which the consistent LBT failure is set on the band, the number of consecutive periods.

In some embodiments, the means for determining the number of consecutive periods comprises means for in the event that the consistent LBT failure is set on the band, determining the number of consecutive periods as 0; and means for switching from a first set of resource for receiving the S-SSB to a second set of resource.

In some embodiments, the means for determining the consistent LBT failure is set on the band or is not set on the band comprises means for in the event that there is a first radio access technology (RAT) other than a new radio (NR) sidelink unlicensed (SL-U) RAT in the band, determining the consistent LBT failure is set on the band or is not set on the band.

In some embodiments, the means for determining the number of consecutive periods comprises means for in the event of absence of a first RAT other than a NR SL-U RAT in the band, determining the number of consecutive periods to be a value lower than a threshold; or means for in the event that there is the first RAT and the consistent LBT failure is unset on the band, determining the number of consecutive periods to be the value lower than the threshold.

In some embodiments, the CCA information further comprises an indication of whether there is the first RAT.

In some embodiments, the apparatus further comprises means for determining, based on the indication, whether there is the first RAT.

In some embodiments, the apparatus further comprises means for receiving, from a network device or another terminal device different from the terminal device 110, the CCA information.

In some embodiments, the number of consecutive periods is determined based on a quality of service (QoS) of the traffic associated with the reference device.

In some embodiments, the number of consecutive periods is a first number, the reference device is a first reference device, and the means for determining the number of consecutive periods comprises means for being based on the QoS of the traffic associated with the reference device is higher than a QoS of the traffic associated with a second reference device, determining the first number larger than a second number of consecutive periods associated with at least one LBT failure in which a SLSS is unavailable from the second reference device.

In some embodiments, the number of consecutive periods is determined based on a number of repetitions in frequency domain associated with the S-SSB.

In some embodiments, the means for determining the number of consecutive periods comprises means for being based on determining that the number of the plurality of repetitions is larger than a threshold, determining a first value as the number of consecutive periods; or means for being based on determining that the number of the plurality of repetitions is less than or equal to the threshold, determining a second value as the number of consecutive periods, wherein the first value is less than the second value.

In some embodiments, the number of consecutive periods is determined based on availability of a first S-SSB different from a second S-SSB comprising the PSBCH.

In some embodiments, the means for determining the at least one of the evaluation period, the detection period or the measurement period comprises means for determining that at least one additional S-SSB occasion for the first S-SSB is configured, wherein the additional S-SSB occasion is different from at least one S-SSB occasion for evaluating the reference signal receiving power, means for determining that the at least one of the evaluation period, the detection period with allowed dropping rate and the measurement period of the reference signal receiving power for the at least one S-SSB occasion and the at least one additional S-SSB occasion is to be completed in less than a predetermined evaluation period, a predetermined detection period with allowed dropping rate and a predetermined measurement period; and means for determining part of the at least one of the predetermined evaluation period, the predetermined detection period with allowed dropping rate and the predetermined measurement period as the at least one of the evaluation period, the detection period with allowed dropping rate or the measurement period.

In some embodiments, the means for determining the at least one of the evaluation period, the detection period with allowed dropping rate or the measurement period comprises means for determining one of the following: at least one additional S-SSB occasion for the first S-SSB is not configured, wherein the additional S-SSB occasion is different from at least one S-SSB occasion for evaluating the reference signal receiving power; or the at least one additional S-SSB occasion for the first S-SSB is configured, and the at least one of the evaluation period, the detection period with allowed dropping rate and the measurement period of the reference signal receiving power for the at least one S-SSB occasion and the at least one additional S-SSB occasion is not to be completed in less than at least one of a predetermined evaluation period, a predetermined detection period with allowed dropping rate or a predetermined measurement period; and means for determining at least one of an extended evaluation period, an extended detection period with allowed dropping rate and an extended measurement period as the at least one of the evaluation period, the detection period with allowed dropping rate and the measurement period, wherein the at least one of the extended evaluation period, the extended detection period with allowed dropping rate and the extended measurement period extends a plurality of S-SSB periods based on the at least one of the predetermined evaluation period, the detection period with allowed dropping rate or the measurement period.

In some embodiments, the number of the plurality of S-SSB periods is associated with one of the following: a priority level of the reference device for being a synchronization reference; a plurality of previous measured reference signals associated with the PSBCH of the reference device; clear channel assessment (CCA) information related to the channel access of the reference device; a quality of service (QoS) of the traffic associated with the reference device; or a number of repetitions in frequency domain associated with the S-SSB.

In some embodiments, the determination of the at least one of the evaluation period, the detection period with allowed dropping rate or the measurement period is used for selection or reselection of a reference device among the plurality of synchronization reference devices.

In some embodiments, the apparatus further comprises means for performing other steps in some embodiments of the method 200. In some embodiments, the means comprises at least one processor; and at least one memory including computer program code, the at least one memory and computer program code configured to, with the at least one processor, cause the performance of the apparatus.

Fig. 10 is a simplified block diagram of a device 1000 that is suitable for implementing embodiments of the present disclosure. The device 1000 may be provided to implement the communication device, for example the terminal device 110 as shown in Fig. 1A. As shown, the device 1000 includes one or more processors 1010, one or more memories 1020 coupled to the processor 1010, and one or more communication modules 1040 coupled to the processor 1010.

The communication modules 1040 is for bidirectional communications. The communication modules 1040 has at least one antenna to facilitate communication. The communication interface may represent any interface that is necessary for communication with other network elements.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1022 and other volatile memories that will not last in the power-down duration.

A computer program 1030 includes computer executable instructions that are executed by the associated processor 1010. The program 1030 may be stored in the ROM 1020. The processor 1010 may perform any suitable actions and processing by loading the program 1030 into the RAM 1022.

The embodiments of the present disclosure may be implemented by means of the program 1030 so that the device 1000 may perform any process of the disclosure as discussed with reference to Figs. 2 to 9. The embodiments of the present disclosure may also be implemented by hardware or by a combination of software and hardware.

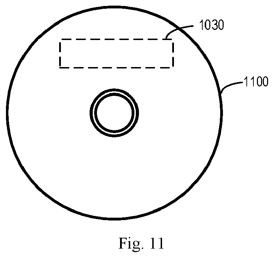

In some embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. The computer readable medium may include any types of tangible non-volatile storage, such as ROM, EPROM, a flash memory, a hard disk, CD, DVD, and the like. Fig. 11 shows an example of the computer readable medium 1100 in form of CD or DVD. The computer readable medium has the program 1030 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1000 as described above with reference to Figs. 2-9. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
at least one processor; and
at least one memory storing instructions that, when executed by the at least one processor, cause the terminal device at least to:
measure a reference signal receiving power associated with a physical sidelink broadcast channel, PSBCH, of a reference device which is one of a plurality of synchronization reference devices;
determine a number of consecutive periods associated with a listen before talk, LBT, failure in which a sidelink synchronization signal, SLSS, is unavailable from the reference device; and
determine, based on the number of consecutive periods, at least one of an evaluation period, a detection period with allowed dropping rate or a measurement period for the terminal device to evaluate the reference signal receiving power, wherein the consecutive periods correspond to a plurality of consecutive sidelink synchronization signal block, S-SSB periods or a plurality of consecutive discontinuous reception, DRX, cycles.

2. The terminal device of claim 1, wherein the number of consecutive periods is determined: based on a priority level of the reference device for being a synchronization reference, or based on a plurality of previous measured reference signals associated with the PSBCH of the reference device, or based on a quality of service, QoS, of the traffic associated with the reference device, or based on a number of repetitions in frequency domain associated with the S-SSB, or based on availability of a first S-SSB different from a second S-SSB comprising the PSBCH.

3. The terminal device of claim 2, wherein the number of consecutive periods is a first number, the reference device is a first reference device, and the terminal device is caused to determine the number of consecutive periods by:
based on determining that the priority level of the reference device is lower than a priority level of a second reference device for being a synchronization reference, determining the first number less than a second number of consecutive periods associated with at least one LBT failure in which a SLSS is unavailable from the second reference device.

4. The terminal device of claim 2, wherein the terminal device is caused to determine the number of consecutive periods by:
determining an average value of the plurality of previous measured reference signals from the reference device; and
determining, based on the average value, the number of consecutive periods.

5. The terminal device of claim 4, wherein the number of consecutive periods is a first number, the reference device is a first reference device, the average value is a first average value, and the terminal device is further caused to determine the number of consecutive periods by:
determining that the first number is larger than a second number of consecutive periods associated with at least one LBT failure in which a SLSS is unavailable from a second reference device among the plurality of synchronization reference devices, wherein a second average value of a plurality of previous measured reference signals from the second reference device is less than the first average value, or by:
determining that the first number is larger than a third number of consecutive periods associated with at least one LBT failure in which a SLSS is unavailable from a third reference device among the plurality of synchronization reference devices,
wherein a third average value of a plurality of previous measured reference signals from the third reference device is equal to the first average value, and a moving speed of the third reference device is larger than a moving speed of the reference device.

6. The terminal device of claim 1, wherein the number of consecutive periods is determined based on clear channel assessment, CCA, information related to the channel access of the reference device, wherein the CCA information comprises status information associated with a consistent LBT failure on a band in which the S-SSB is transmitted, wherein the terminal device is further caused to:
determine, based on the status information, the consistent LBT failure is set on the band or is not set on the band.

7. The terminal device of claim 6, wherein the terminal device is caused to determine the number of consecutive periods by:
in the event that the consistent LBT failure is set on the band, determining, based on a time period during which the consistent LBT failure is set on the band, the number of consecutive periods.

8. The terminal device of claim 6, wherein the terminal device is caused to determine the number of consecutive periods by:
in the event that the consistent LBT failure is set on the band, determining the number of consecutive periods as 0; and
switching from a first set of resource for receiving the S-SSB to a second set of resource.

9. The terminal device of any of claims 6-8, wherein the terminal device is caused to determine the consistent LBT failure is set on the band or is not set on the band by:
in the event that there is a first radio access technology, RAT, other than a new radio, NR, sidelink unlicensed, SL-U RAT in the band, determining the consistent LBT failure is set on the band or is not set on the band.

10. The terminal device of claim 6, wherein the terminal device is caused to determine the number of consecutive periods by one of the following:
in the event of absence of a first RAT other than a NR SL-U RAT in the band, determining the number of consecutive periods to be a value lower than a threshold; or
in the event that there is the first RAT and the consistent LBT failure is unset on the band, determining the number of consecutive periods to be the value lower than the threshold.

11. The terminal device of claim 9 or 10, wherein the CCA information further comprises an indication of whether there is the first RAT, wherein the terminal device is further caused to:
determine, based on the indication, whether there is the first RAT.

12. The terminal device of any of claims 6-11, wherein the terminal device is further caused to:
receive, from a network device or another terminal device different from the terminal device, the CCA information.

13. The terminal device of claim 2, wherein the number of consecutive periods is a first number, the reference device is a first reference device, and the terminal device is caused to determine the number of consecutive periods by:
based on the QoS of the traffic associated with the reference device is higher than a QoS of the traffic associated with a second reference device, determining the first number larger than a second number of consecutive periods associated with at least one LBT failure in which a SLSS is unavailable from the second reference device.

14. The terminal device of claim 2, wherein the terminal device is further caused to determine the number of consecutive periods by:
based on determining that the number of the plurality of repetitions is larger than a threshold, determining a first value as the number of consecutive periods; or
based on determining that the number of the plurality of repetitions is less than or equal to the threshold, determining a second value as the number of consecutive periods, wherein the first value is less than the second value.

15. The terminal device of claim 2, wherein the terminal device is caused to determine the at least one of the evaluation period, the detection period or the measurement period by:
determining that at least one additional S-SSB occasion for the first S-SSB is configured, wherein the additional S-SSB occasion is different from at least one S-SSB occasion for evaluating the reference signal receiving power;
determining that the at least one of the evaluation period, the detection period with allowed dropping rate and the measurement period of the reference signal receiving power for the at least one S-SSB occasion and the at least one additional S-SSB occasion is to be completed in less than a predetermined evaluation period, a predetermined detection period with allowed dropping rate and a predetermined measurement period; and
determining part of the at least one of the predetermined evaluation period, the predetermined detection period with allowed dropping rate and the predetermined measurement period as the at least one of the evaluation period, the detection period with allowed dropping rate or the measurement period.
